# EUROPEAN PATENT SPECIFICATION

(11) **EP 2 026 505 B1**
(45) Date of publication and mention of the grant of the patent: **11.06.2014**
(21) Application number: 08014222.7
(22) Date of filing: 08.08.2008
(51) Int. Cl.: H04L 29/06, H04L 29/08

(54) **Communication method for connection device, program for performing said communication method and connection device**
Kommunikationsverfahren für Verbindungsvorrichtung, Programm zur Durchführung des Kommunikationsverfahrens und Verbindungsvorrichtung
Procédé de communication pour dispositif de communication, programme pour la réalisation dudit procédé et dispositif de connexion

(30) Priority: 10.08.2007 JP 2007209911
(43) Date of publication of application: 18.02.2009
(73) Proprietor: Yamaha Hatsudoki Kabushiki Kaisha, Shizuoka-ken Shizuoka 438-8501 (JP)
(72) Inventor: Okuyama, Takashi, Hamamatsu-shi Shizuoka-ken 432-8058 (JP)
(74) Representative: Grünecker, Kinkeldey, Stockmair & Schwanhäusser

(56) References cited:
- DE-A1- 19 847 701
- US-A1- 2004 010 349

## Description

The present invention relates to a communication method for a connection device connected to a network, in particular a network mounted on a boat, a program for performing said communication method, and a connection device.

Conventionally, when a connection device is connected to this type of network, it is necessary to prepare the connection device in conformity with a protocol (communication protocol) of a network. Therefore, in a case that there are plural types of protocols in the network, it troubles to prepare the same number of connection devices as of protocols.

For a method to prevent this kind of trouble, there have been proposed a technique disclosed in JP-U-Hei 5-59282 or a technique disclosed in JP-B-3669671.

However, JP-U-Hei 5-59282 has problems as follows.

First, it is necessary to determine a type of protocol every time that a failure diagnosis device is connected, so in a case of the connection device that is connected at all times, a waiting time for determination to complete is long and not practical, and also erroneous determination occurs more frequently, therefore enough reliability cannot be ensured.

Second, when the connection device conforming to the protocol that performs authentication (hereinafter referred to as an authentication conforming device) is connected to the network of the protocol that does not perform authentication (hereinafter referred to as an unauthenticated protocol), it may cause authentication failure. Therefore, upward compatibility cannot be ensured, and usability lowers.

On the other hand, JP-B-3669671 requires plural communication lines corresponding to a number of failure diagnosis circuits, so it cannot be realized in low-cost.

Document DE 198 47 701 A1 describes a device for a network system which has preinstalled protocols. By receiving a network communication the device detects the used protocol and is able to execute it.

Document US 2004/010 349 A1 describes a CAN bus system device which realizes a system with reduced complexity by omitting external devices and can also be remotely controlled.

In view of these problems, it is an objective of the present invention to provide a communication method for a communication device, a program for performing said communication method and a connection device that are practical and reliable, able to improve usability by ensuring upward compatibility, and also able to be realized in low-cost.

According to the present invention, said objective is solved by a communication method according to claim 1.

Accordingly, when the connection device is connected to the network, the connection device identifies a protocol of the network by itself and operates appropriately. Therefore, it is possible to ensure upward compatibility of the connection device and improve usability. Also, it is possible to be realized in low-cost because plural communication lines are not necessary unlike in JP-B-3669671.

Preferably, when the connection device is connected to the network for the first time, a predetermined waiting time period is set, in which the connection device awaits reception of the certain message transmitted through the network.

Further, preferably the certain message is sent by another connection device connected to the network.

Still further, preferably the protocol of the network is identified based on an identification field of the certain message, preferably based on a communication identifier of said identification field.

Yet further still, preferably the identified protocol of the network is stored in a nonvolatile memory of the connection device in order to determine the device protocol.

Preferably, the identification of the protocol of the network by means of a certain message is prevented, when the connection device is connected for the second or a further time to the network, and when the protocol of the network has been identified before.

Further, preferably if the device protocol is erased from the nonvolatile memory by means of a reset operation, identification of the protocol of the network is performed based on specific information in a certain message transmitted through the network, when the connection device is connected to the network for the next time, and/or the next certain message is sent through the network.

According to the present invention, said objective is also solved by a program for performing a communication method according to one of the embodiments above, when being executed by a central processing unit of a connection device.

Accordingly, same effects as above can be obtained.

According to the present invention, said objective is also solved by a connection device, in particular connection device for a boat, having a central processing unit configured to perform a method according to one of the embodiments above.

Preferably, a nonvolatile memory means configured to store the protocol of the network as protocol information is provided.

Accordingly, at the time of connection for the second time or later, a determining process of protocol type becomes unnecessary and a waiting time shortens as much, so that prompt and stable communication is possible. As a result, practicality and reliability of the communication device can be improved in comparison with JP-U-Hei 5-59282.

Further, preferably a memory-reset means configured to erase the protocol information stored in the memory means to return to its initial state is provided.

Accordingly, the device protocol stored in the memory means can be erased and returned to an initial state by a memory reset means, so it can easily react to a change of the network to which the connection device is connected.

Preferably, the connection device is a gauge and/or a gateway and/or an outboard motor and/or a remote control, and/or an immobilizer and/or a multifunction sensor for a boat.

There is also provide a system comprising a boat and a network installed thereon to which at least one connection device according to one of the embodiments above is connected, preferably is detachably connected.

In the following, the present invention is explained in greater detail by means of embodiments thereof in conjunction with the accompanying drawings, wherein:
- FIG.1: is a schematic view of a connection device according to the embodiment 1 connected to a network;
- FIG. 2: is a block diagram of a connection device according to the embodiment 1;
- FIG. 3: is a flow chart of a protocol-switching program according to the embodiment 1;
- FIG. 4: is a schematic view of a change of a communication state according to the embodiment 1; and
- FIG.5: is a schematic view representing a certain message according to the embodiment 1.

### Among others, the following reference signs are used in the Figures:

- 1 :: boat
- 2:: hull
- 3:: hub
- 4:: gauge
- 5:: gateway
- 6:: outboard motor
- 7:: remote control
- 8:: immobilizer
- 9:: multi function sensor
- 10:: connection device
- 11:: CPU (central processing unit)
- 12:: protocol identification section (protocol identification means)
- 13:: protocol determination section (protocol determination means)
- 14:: memory reset section (memory reset means)
- 15:: data communication section (data communication means)
- 16:: data memory (memory means)
- 17:: program memory
- 19:: reset button
- 20:: mechanical cable
- F1:: identification field
- F2:: data field
- M:: certain message
- N:: network
- PRG:: protocol switching program

### Description will be hereinafter made of the embodiment.

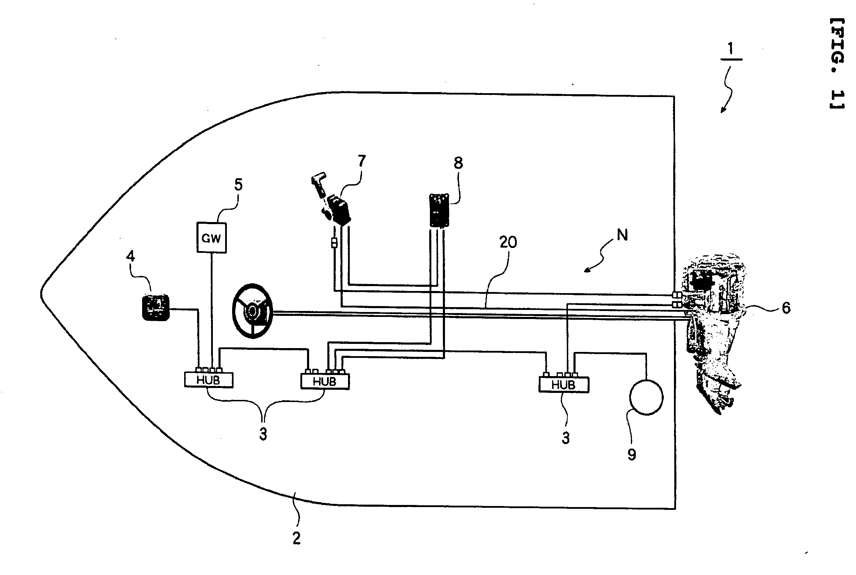

### FIGs. 1 though 5 show the first embodiment.

First, the structure of the embodiment will be described. As shown in FIG. 1, a boat 1 includes a hull 2, and an outboard motor 6 is detachably attached to the rear portion (stern) of the hull 2. Also, three hubs 3 are provided to the hull 2, and these hubs 3 are detachably connected with various connection devices 10 that includes specifically a gauge 4, a gateway 5, a remote control 7, an immobilizer 8, and a multi function sensor 9. And, a network N is configured by these devices. This network N supports both of a first protocol P1 and a second protocol P2. There are two types of connection devices 10. One type of these supports the first protocol P1, and the other one supports the second protocol P2. The former connection device is set to start transmitting a certain message M such as an address application message or the like when connected to the network N, on the other hand, the latter connection device is set not to transmit any data when connected to the network N.

A outboard motor 6 and a remote control 7 are connected by the connection method of a mechanical cable 20.

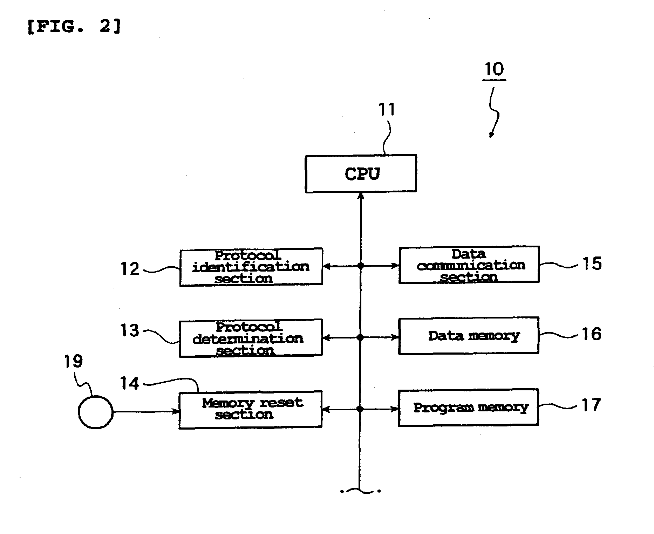

As shown in FIG. 2, the connection device 10 includes a CPU (central processing section), and the CPU 11 is connected with a protocol identification section (protocol identification means) 12, a protocol determination section (protocol determination means) 13, a memory reset section (memory reset means) 14, a data communication section (data communication means) 15, a nonvolatile data memory (memory means) 16, and a program memory 17. Furthermore, a reset button 19 is connected to the memory reset section 14.

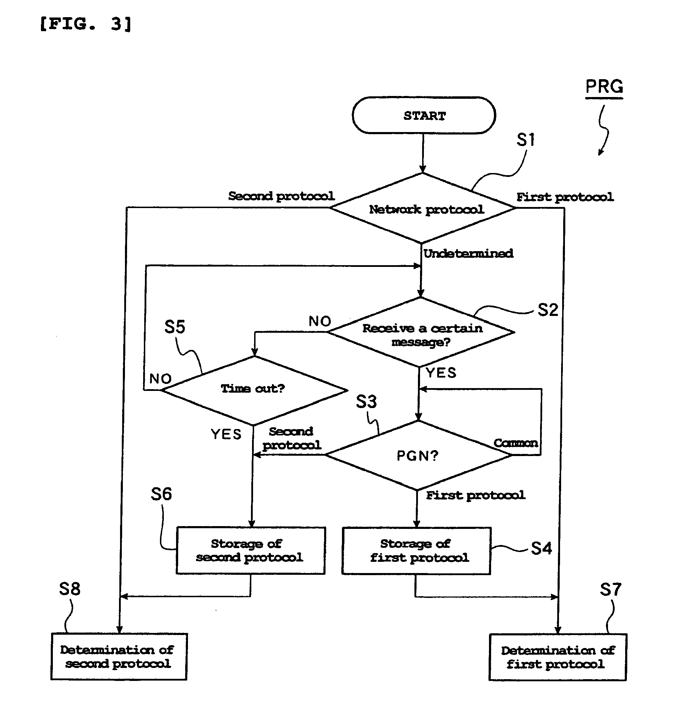

Here, the data communication section 15 has a function to conform to both of the first protocol P1 and the second protocol P2 and perform data communication with the network N. Also, the data memory 16 is provided with an area to readably and writably store the protocol information. Furthermore, a protocol switching program PRG shown in FIG. 3 is readably stored in the program memory 17.

The function is next described.

When the connection device 10 with the above mentioned configuration is connected to the network N for the first time, the CPU 11 reads out the protocol-switching program PRG shown in FIG. 3 from the program memory 17, and executes a protocol switching action as follows based on the protocol switching program PRG.

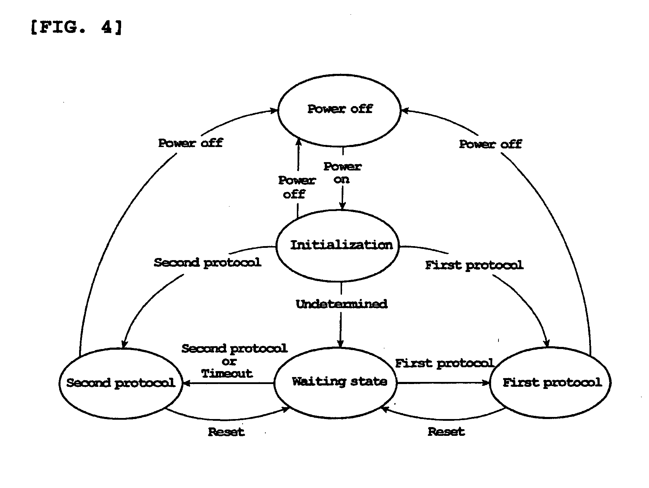

At first, the CPU 11 performs a predetermined initializing action (refer to the arrow indicating from "Power OFF" to "Initialization" shown in FIG. 4), and then commands a identification action of a protocol of the network N to the protocol identification section 12. When this is received, the protocol identification section 12 attempts to identify the protocol of the network N based on the protocol information stored in the data memory 16 (step S1 of the protocol switching program PRG). However, this is a first time connection, so that no protocol information is stored in the data memory 16. Therefore, the protocol identification section 12 cannot identify a protocol of the network N based on the protocol information. Then, the protocol identification section 12 outputs a signal of the information to the CPU 11.

And, the CPU 11 changes a communication state to a waiting state (refer to the arrow indicating from "Initialization" to "Waiting State" shown in FIG. 4), and then commands an acceptance check action of the certain message M to the protocol identification section 12. When this is received, the protocol identification section 12 performs acceptance check of the certain message M transmitted from another connection device 10 connected to the network N until a predetermined waiting time period (for example, 3 seconds) is elapsed (the step 2 of the protocol switching program PRG).

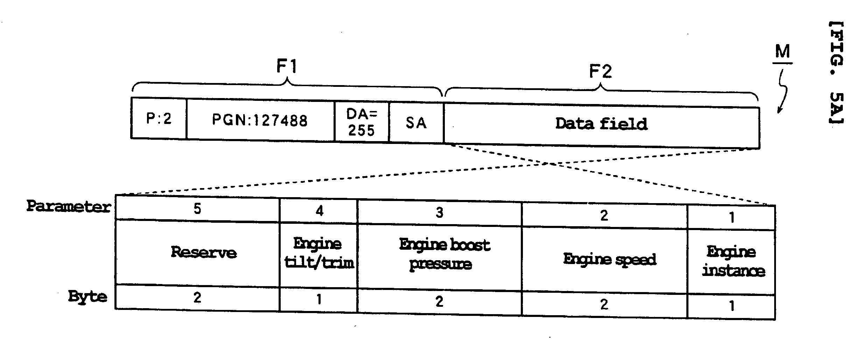

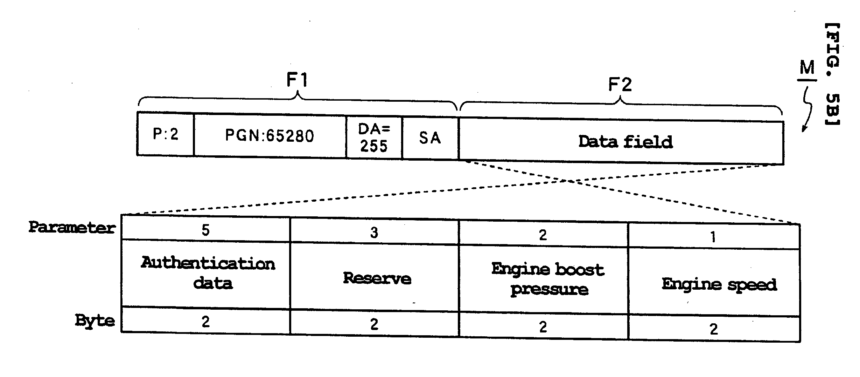

This message M, for example as shown in FIG. 5A and FIG. 5B, is configured by a identification field F1 and a data field F2. Here, the identification field F1 stores identification information such as P (priority), communication identifier PGN (communication ID), DA (destination address), SA (source address). The data field F2 stores various engine information such as engine speed.

And, in a case that a certain message M is received within a predetermined waiting time, the protocol identification section 12 identifies a protocol of the network N based on the attribution of PGN in this message M (step S3 in the protocol switching program PRG).

That is, in a case that this PGN is used in the first protocol P1 alone (for example "127488" shown in FIG. 5A), the protocol identification section 12 determines that the protocol of the network N is the first protocol P1, and outputs the signal of the information to the CPU 11. The CPU 11, for the convenience of connection for the second time or later, writes the "first protocol P1" as protocol information and stores it in the data memory 16 (step S4 of the protocol switching program PRG), then commands the determination action of the device protocol to the protocol determination section 13. When this is received, the protocol determination section 13 determines the device protocol as "first protocol P1" (step S7 of the protocol switching program PRG: refer to the arrow indicating from "Waiting State" to "First Protocol" shown in FIG. 4), and outputs the signal of the information to the CPU 11. Then, the CPU 11 commands a data communication action by the device protocol to the data communication section 15. When this is received, the data communication section 15 performs data communication with the network N in conformity with the first protocol P1. As a result, the connection device 10 functions as a device that corresponds to the first protocol P1.

Also, in a case that this PGN is used in the second protocol P2 alone (for example "65280" shown in FIG. 5(B)), the protocol identification section 12 determines that the protocol of the network N is the second protocol P2, and outputs the signal of the information to the CPU 11. The CPU 11, for the convenience of connection for the second time or later, writes the "second protocol P2" as protocol information in the data memory 16 and lets it store the information (step S6 of the protocol switching program PRG), then commands the determination action of the device protocol to the protocol determination section 13. When this is received, the protocol determination section 13 determines the device protocol as "second protocol P2" (step S8 of the protocol switching program PRG: refer to the arrow indicating from "Waiting State" to "Second Protocol" shown in FIG. 4), and outputs the signal of the information to the CPU 11. Then, the CPU 11 commands a data communication action by the device protocol to the data communication section 15. When the command is received, the data communication section 15 performs data communication with the network N in conformity with the second protocol P2. As a result, the connection device 10 functions as a device that corresponds to the second protocol P2.

In a case that this PGN is used commonly in the first and second protocols P1, P2, it is unknown whether the protocol of the network N is the first protocol P1 or the second protocol P2, so that the protocol identification section 12 waits for receiving the next certain message M.

On the other hand, in a case that the message M is not received at all within a predetermined waiting time (step S5 of the protocol switching program PRG), the protocol identification section 12 determines that the protocol of the network N is the second protocol P2, and outputs the signal of the information to the CPU 11. This process is performed based on the following logic. If there is at least one device among other connection devices 10 connected to the network N, which corresponds to the first protocol P1, a certain message M must be received within a predetermined waiting time. In other words, if no message is received within a predetermined waiting time, other connection devices 10 connected to the network N should be all corresponding to the second protocol P2.

The CPU 11, for the convenience of connection for the second time or later, writes the "second protocol P2" as protocol information and stores the information in the data memory 16 (step S6 of the protocol switching program PRG), then commands the determination action of the device protocol to the protocol determination section 13. When this is received, the protocol determination section 13 determines the device protocol as "second protocol P2" (step S8 of the protocol switching program PRG, refer to the arrow indicating from "Waiting State" to "Second Protocol" shown in FIG. 4), and outputs the signal of the information to the CPU 11. Then, the CPU 11 commands a data communication action by the device protocol to the data communication section 15. When the command is received, the data communication section 15 performs data communication with the network N conforming to the second protocol P2. As a result, the connection device 10 functions as a device that corresponds to the second protocol P2.

Here, the procedure of first time connection is complete.

As described above, when the connection device 10 is connected to the network N, the connection device 10 identifies the protocol of the network N by itself and performs appropriately no matter whether the protocol of this network N is the first protocol P1 or the second protocol P2. Therefore, even in a case that the protocol of the network N is an unauthenticated protocol and the connection device 10 is an authentication conforming device, authentication failure is prevented, and upward compatibility of the connection device 10 can be maintained, and usability can be improved.

Also, it is possible to be realized in low-cost because plural communication lines are not necessary unlike in JP-B-3669671.

When power supply of the connection device 10 is turned off in a state that the device protocol is the "First Protocol P1" or the "Second Protocol P2" or in an initialization state, an electric current to the CPU 11 and the like is shut off (refer to the arrow indicating from "Initialization" to "Power Off', the arrow indicating from the "First Protocol" to the "Power Off', and the arrow indicating from the "Second Protocol" to the "Power Off', as shown in FIG. 4). At this time, the data memory 16 is nonvolatile, so that protocol information is not erased by the power off operation.

When the connection device 10 is connected to the network N for the second time or later, the CPU 11 reads out the protocol-switching program PRG shown in FIG. 3 from the program memory 17 in the same way as in the first time connection, and performs a protocol switching action as follows based on the protocol switching program PRG.

At first, the CPU 11 performs a predetermined initialization action (refer to the arrow indicating from "Power Off' to "Initialization" shown in FIG. 4). Here, protocol information in the data memory 16 is not erased by the initialization action but retained even after initialization.

Next, the CPU 11 commands the identification action of a protocol of the network N to the protocol identification section 12. When the command is received, the protocol identification section 12 attempts to identify the protocol of the network N based on the protocol information stored in the data memory 16 (step S1 of the protocol switching program PRG). At this time, unlike the first time connection, protocol information (the "First Protocol P1" or the "Second Protocol P2") is stored in the data memory 16, so that the protocol identification section 12 identifies a protocol of the network N based on this protocol information.

That is, in a case that the "first protocol P1" as protocol information is stored in the data memory 16, the protocol identification section 12 determines that the protocol of the network N is the first protocol P1, and outputs the signal of the information to the CPU 11. Then, the CPU 11 commands a determination action of the device protocol to the protocol determination section 13. When the command is received, the protocol determination section 13 determines the device protocol as the "first protocol P1" (step S7 of the protocol switching program PRG: refer to the arrow indicating from "Initialization" to "First Protocol" shown in FIG. 4), and outputs the signal of the information to the CPU 11. Then, the CPU 11 commands a data communication action by the device protocol to the data communication section 15. When the command is received, the data communication section 15 performs data communication with the network N in conformity with the first protocol P1. As a result, the connection device 10 functions as a device that corresponds to the first protocol P1.

In a case that the "second protocol P2" as protocol information is stored in the data memory 16, the protocol identification section 12 determines that the protocol of the network N is the second protocol P2, and outputs the signal of the information to the CPU 11. Then, the CPU 11 commands a determination action of the device protocol to the protocol determination section 13. When the command is received, the protocol determination section 13 determines the device protocol as the "Second Protocol P2" (step S8 of the protocol switching program PRG, refer to the arrow indicating from "Initialization" to the "Second Protocol" shown in FIG. 4), and outputs the signal of the information to the CPU 11. Then, the CPU 11 commands a data communication action by the device protocol to the data communication section 15. When the command is received, the data communication section 15 performs data communication with the network N in conformity with the second protocol P2. As a result, the connection device 10 functions as a device that corresponds to the second protocol P2.

Here, the procedure of the connection for the second time or later is complete.

As described above, a process of determining a type of protocol (steps S2 to S6 in the protocol switching program PRG) becomes unnecessary by referring the protocol information in the data memory 16, at the time of connection for the second time or later. Therefore, a waiting time is reduced as much, so that prompt and stable communication is possible. As a result, practicality and reliability of the communication device 10 can be improved in comparison with JP-U-Hei 5-59282.

By the way, in accordance with a change or the like of the network N connected with the connection device 10, the reset button 19 is pressed in order to reset the protocol information in the data memory 16. Then, the memory reset section 14 erases the protocol information in the data memory 16 to return it to the initial state.

For example, in a case that the protocol information immediately before resetting is the "First Protocol", the memory reset section 14 erases this "First Protocol" and changes the communication state to the waiting state (refer to the arrow indicating from "First Protocol" to "Waiting State" shown in FIG. 4).

Also, in a case that the protocol information immediately before resetting is the "Second Protocol", the memory reset section 14 erases this "Second Protocol" and changes the communication state to the waiting state (refer to the arrow indicating from "Second Protocol" to "Waiting State" shown in FIG. 4).

As described above, the protocol information in the data memory 16 can be erased and returned to its initial state by pressing the reset button 19, so it can easily react to a change of the network N to which the connection device 10 is connected. Thus, when the connection device 10 is connected to the network N or another network for the next time and/or the next certain message M is sent, identification of the protocol of the network is performed based on specific information in said certain message M as disclosed before with regard to step S2.

The embodiment 1 described above explains the case in which a protocol in the network N is identified based on PGN in the certain message M; however, identification of a protocol in the network N may be performed based on the information other than PGN.

Also, the embodiment 1 described above explains about the boat 1 connected by the connection method in which the outboard motor 6 and the remote control 7 are connected by the mechanical cable 20; however, it is understood that the present teaching is applicable to the boat 1 that uses a DBW (drive by wire) system, in which the ECU of the outboard motor 6 and the ECU of the remote controller 7 are electrically connected through a LAN (Local Area Network).

Furthermore, the embodiment 1 explains the boat 1 in which the outboard motor 6 is attached to the hull 2. However, the present teaching is applicable to the boat 1 in which a boat propulsion device (such as an inboard-outboard drive) other than the outboard motor 6 is attached to the hull 2.

The present teaching is widely applicable to various boats such as pleasure boats, small planing boats, personal water craft, etc.

The description above discloses (among others) an embodiment of a connection device connected to a network mounted in a boat, comprising: a protocol identification means for identifying a protocol of the network based on specific information in a certain message transmitted through the network; a protocol determination means for determining a device protocol in accordance with the protocol of the network identified by the protocol identification means; and a data communication means to perform data communication with the network conforming to the device protocol determined by the protocol determination means.

Preferably, a nonvolatile memory means for storing the protocol of the network as protocol information is provided.

Further, preferably a memory-reset means that erases protocol information stored in the memory means to return to its initial state is provided.

There is also disclosed an embodiment of a program, wherein a connection device connected to a network mounted in a boat executes: a protocol identification process of identifying a protocol of the network based on specific information in a certain message transmitted through the network; a protocol determination process of determining a device protocol in accordance with the protocol of the network; and a data communication process of performing data communication with the network in conformity with the device protocol.

In order to maintain upward compatibility and to improve usability in a connection device connected to a network mounted in a boat, the following is preferably suggested:
A protocol of this network is identified based on PGN (communication ID) in a certain message transmitted through a network (step S3). Device protocol is determined in accordance with the protocol of this network (steps S7, S8). Data communication with the network is performed in conformity with this device protocol. Accordingly, when the connection device is connected to the network, the connection device identifies a protocol of the network by itself and operates appropriately. Therefore, upward compatibility is maintained, and usability is improved.

## Claims

1. Communication method for a connection device (10) connected to a network (N), in particular a network (N) mounted on a boat (1), the communication method comprising the following steps:
identifying a protocol of the network (N) based on specific information in a certain message (M) transmitted through the network (N);
determining a device protocol for the connection device (10) in accordance with the identified protocol of the network (N); and
performing data communication with the network (N) conforming to the determined device protocol, and
in a case that the certain message (M) is not received at all within a predetermined waiting time, determining that the protocol of the network (N) is a second protocol.

2. Communication method according to claim 1, wherein, when the connection device (10) is connected to the network (N) for the first time, a predetermined waiting time period is set, in which the connection device (10) awaits reception of the certain message (M) transmitted through the network (N).

3. Communication method according to claim 1 or 2, wherein the certain message (M) is sent by another connection device connected to the network (N).

4. Communication method according to one of claims 1 to 3, wherein the protocol of the network (N) is identified based on an identification field (F1) of the certain message (M), preferably based on a communication identifier (PGN) of said identification field (F1).

5. Communication method according to one of claims 1 to 4, wherein the identified protocol of the network (N) is stored in a nonvolatile memory (16) of the connection device (10) in order to determine the device protocol.

6. Communication method according to one of claims 1 to 5, wherein the identification of the protocol of the network (N) by means of a certain message (M) is prevented, when the connection device (10) is connected for the second or a further time to the network (N), and when the protocol of the network (N) has been identified before.

7. Communication method according to claim 5 or 6, wherein, if the device protocol is erased from the nonvolatile memory (16) by means of a reset operation, identification of the protocol of the network (N) is performed based on specific information in a certain message (M) transmitted through the network (N), when the connection device (10) is connected to the network (N) for the next time, and/or the next certain message (M) is sent through the network (N).

8. Program for performing a communication method according to one of claims 1 to 7, when being executed by a central processing unit (11) of a connection device (10).

9. Connection device, in particular connection device for a boat (1), having a central processing unit (11) configured to perform a method according to one of claims 1 to 7.

10. Connection device according to claim 9, wherein a nonvolatile memory means (16) configured to store the protocol of the network (N) as protocol information is provided.

11. Connection device according to claim 10, wherein a memory-reset means (14,19) configured to erase the protocol information stored in the memory means (16) to return to its initial state is provided.

12. Connection device according to one of claims 9 to 11, wherein the connection device (10) is a gauge (4) and/or a gateway (5) and/or an outboard motor (6) and/or a remote control (7), and/or an immobilizer (8) and/or a multifunction sensor (9) for a boat (1).

13. System comprising a boat (1) and a network (N) installed thereon to which at least one connection device according to one of claims 9 to 12 is connected, preferably is detachably connected.

## Patentansprüche

1. Kommunikationsverfahren für eine Verbindungsvorrichtung (10), die mit einem Netzwerk (N) verbunden ist, insbesondere mit einem Netzwerk (N), das auf einem Boot (1) montiert ist, wobei das Kommunikationsverfahren die folgenden Schritte umfasst:
Identifizieren eines Protokolls des Netzwerks (N) basierend auf spezifischen Informationen in einer bestimmten Nachricht (M), die über das Netzwerk (N) übertragen wird;
Bestimmen eines Geräteprotokolls für die Verbindungsvorrichtung (10) in Übereinstimmung mit dem identifizierten Protokoll des Netzwerks (N); und
Durchführen von Datenkommunikation mit dem Netzwerk (N) übereinstimmend mit dem ermittelten Geräteprotokoll, und
für den Fall, dass die bestimmte Nachricht (M) innerhalb einer vorbestimmten Wartezeit nicht empfangen wird, bestimmt wird, dass das Protokoll des Netzwerks (N) ein zweites Protokoll ist.

2. Kommunikationsverfahren nach Anspruch 1, wobei, wenn die Verbindungsvorrichtung (10) mit dem Netzwerk (N) zum ersten Mal verbunden ist, eine vorbestimmte Wartezeitdauer eingestellt wird, in der die Verbindungsvorrichtung (10) auf den Empfang der bestimmten Nachricht (M) wartet, die über das Netzwerk (N) übertragen wird.

3. Kommunikationsverfahren nach Anspruch 1 oder 2, wobei die bestimmte Nachricht (M) durch eine andere Verbindungsvorrichtung, die mit dem Netzwerk (N) verbunden ist, gesendet wird.

4. Kommunikationsverfahren nach einem der Ansprüche 1 bis 3, wobei das Protokoll des Netzwerks (N) basierend auf einem Identifikationsfeld (F1) der bestimmten Nachricht (M) erkannt wird, vorzugsweise basierend auf einer Kommunikationskennung (PGN) des Identifikationsfelds (F1).

5. Kommunikationsverfahren nach einem der Ansprüche 1 bis 4, wobei das identifizierte Protokoll des Netzwerks (N) in einem nicht-flüchtigen Speicher (16) der Verbindungsvorrichtung (10) gespeichert wird, um das Geräteprotokoll zu bestimmen.

6. Kommunikationsverfahren nach einem der Ansprüche 1 bis 5, wobei die Identifikation des Protokolls des Netzwerks (N) mit Hilfe einer bestimmten Nachricht (M) verhindert wird, wenn die Verbindungsvorrichtung (10) zum zweiten Mal oder ein weiteres Mal mit dem Netzwerk (N) verbunden wird, und wenn das Protokoll des Netzwerks (N) bereits zuvor erkannt wurde.

7. Kommunikationsverfahren nach Anspruch 5 oder 6, wobei, wenn das Geräteprotokoll aus dem nicht-flüchtigen Speicher (16) mittels einer Rücksetzhandlung gelöscht wird, die Identifizierung des Protokolls des Netzwerks (N) basierend auf spezifischen Informationen in einer bestimmten Nachricht (M), die über das Netzwerk (N) übertragen wird, durchgeführt wird, wenn die Verbindungsvorrichtung (10) mit dem Netzwerk (N) das nächste Mal verbunden ist, und/oder die nächste bestimmte Nachricht (M) über das Netzwerk (N) gesendet wird.

8. Programm zum Durchführen eines Kommunikationsverfahrens nach einem der Ansprüche 1 bis 7, wenn es von einer zentralen Prozessoreinheit (11) einer Verbindungsvorrichtung (10) ausgeführt wird.

9. Verbindungsvorrichtung, insbesondere Verbindungsvorrichtung für ein Boot (1), die eine zentrale Prozessoreinheit (11) hat, die konfiguriert ist, um ein Verfahren nach einem der Ansprüche 1 bis 7 durchzuführen.

10. Verbindungsvorrichtung nach Anspruch 9, wobei eine nicht-flüchtige Speichereinrichtung (16) vorgesehen ist, die konfiguriert ist, um das Protokoll des Netzwerks (N) als Protokollinformation zu speichern.

11. Verbindungsvorrichtung nach Anspruch 10, wobei eine Speicherrücksetzeinrichtung (14, 19) vorgesehen ist, die konfiguriert ist, um die in der Speichereinrichtung (16) gespeicherte Protokollinformation zu löschen, so dass diese in den Anfangszustand zurückkehrt.

12. Verbindungsvorrichtung nach einem der Ansprüche 9 bis 11, wobei die Verbindungsvorrichtung (10) ein Druckanzeiger (4) und/oder eine Schnittstelle (5) und/oder ein Außenbordmotor (6) und/oder eine Fernsteuerung (7), und/oder eine Wegfahrsperre (8) und/oder ein Multifunktions-Sensor (9) für ein Boot (1) ist.

13. System, umfassend ein Boot (1) und ein Netzwerk (N), das darauf installiert ist, mit dem zumindest eine Verbindungsvorrichtung nach einem der Ansprüche 9 bis 12 verbunden ist, vorzugsweise lösbar verbunden ist.

## Revendications

1. Procédé de communication pour un dispositif de connexion (10) relié à un réseau (N) en particulier un réseau (N) installé sur un bateau, le procédé de communication comprenant les étapes suivantes :
l'identification d'un protocole du réseau (N) fondé sur des informations spécifiques dans un certain message (M) transmis par l'intermédiaire du réseau (N),
la détermination du protocole de dispositif concernant le dispositif de connexion (10) en fonction du protocole identifié du réseau (N), et
l'exécution d'une communication de données avec le réseau (N) conforme au protocole de dispositif déterminé, et
dans le cas où le certain message (M) n'est pas reçu du tout dans un temps d'attente prédéterminé, la détermination de ce que le protocole du réseau (N) est un second protocole.

2. Procédé de communication selon la revendication 1, dans lequel, lorsque le dispositif de connexion (10) est relié au réseau (N) pour la première fois, un intervalle de temps d'attente prédéterminé est établi dans lequel le dispositif de connexion (10) attend la réception du certain message (M) transmis par l'intermédiaire du réseau (N).

3. Procédé de communication selon la revendication 1 ou 2, dans lequel le certain message (M) est envoyé par un autre dispositif de connexion relié au réseau (N).

4. Procédé de communication selon l'une des revendications 1 à 3, dans lequel le protocole du réseau (N) est identifié sur la base d'un champ d'identification (FI) du certain message (M), de préférence sur la base d'un identificateur de communication (PGN) dudit champ d'identification (F1).

5. Procédé de communication selon l'une des revendications 1 à 4, dans lequel le protocole identifié du réseau (N) est stocké dans une mémoire non volatile (16) du dispositif de connexion (10) afin de déterminer le protocole du dispositif.

6. Procédé de communication selon l'une des revendications 1 à 5, dans lequel l'identification du protocole du réseau (N) au moyen d'un certain message (M) est empêché quand le dispositif de connexion (10) est relié pour la seconde ou une autre fois au réseau (N), et quand le protocole du réseau (N) a été identifié auparavant.

7. Procédé de communication selon la revendication 5 ou 6, dans lequel, si le protocole du dispositif est effacé de la mémoire non volatile (16) au moyen d'une opération de réinitialisation, l'identification du protocole du réseau (N) est effectuée sur la base d'informations spécifiques dans un certain message (M) transmis par l'intermédiaire du réseau (N) lorsque le dispositif de connexion (10) est relié au réseau (N) la fois suivante, et/ou que le certain message (M) suivant est envoyé par l'intermédiaire du réseau (N).

8. Programme permettant d'exécuter un procédé de communication conforme à l'une des revendications 1 à 7, lorsqu'il est exécuté par l'unité centrale (11) appartenant à un dispositif de connexion (10).

9. Dispositif de connexion, en particulier dispositif de connexion destiné à un bateau (1), possédant une unité centrale (11) configurée pour exécuter un procédé conforme à l'une des revendications 1 à 7.

10. Dispositif de connexion selon la revendication 9, dans lequel est prévu un composant de mémoire non volatile (16) configuré pour stocker le protocole du réseau (N) comme informations sur le protocole.

11. Dispositif de connexion selon la revendication 17, dans lequel est prévu un composant de réinitialisation de mémoire (14, 19) configuré pour effacer les informations sur le protocole stocké dans le composant de mémoire (16) afin de le ramener dans son état initial.

12. Dispositif de connexion selon l'une des revendications 9 à 11, dans lequel le dispositif de connexion (10) est une jauge (4) et/ou une passerelle (5) et/ou un moteur hors-bord (6) et/ou une télécommande (7) et/ou un dispositif d'immobilisation (8) et/ou un capteur multifonction (9) destinés à un bateau (1).

13. Système comprenant un bateau (1) et un réseau (N) installé sur celui-ci auquel est relié au moins un dispositif de connexion conforme à l'une des revendications 9 à 12, et il est relié de préférence tout en étant amovible.
